# EUROPEAN PATENT APPLICATION

(11) **EP 2 445 146 A1**
(43) Date of publication of application: **25.04.2012**
(21) Application number: 10813263.0
(22) Date of filing: 11.05.2010
(51) Int. Cl.: H04L 12/56

(54) **MOBILE IP SERVICE ACCESS METHOD AND SYSTEM**

(30) Priority: 01.09.2009 CN 200910189928
(71) Applicant: ZTE Corporation, Shenzhen, Guangdong 518057 (CN)
(72) Inventor: NIU, Yuan, Shenzhen Guangdong 518057 (CN); JIN, Renkang, Shenzhen Guangdong 518057 (CN); JING, Weidong, Shenzhen Guangdong 518057 (CN)
(74) Representative: Sander Jakobsson, Sofia Ellinor
(86) International application number: PCT/CN2010/072593
(87) International publication number: WO 2011/026341

(57) **Abstract**

The present invention provides a method for mobile IP access, including: in a process of negotiating and establishing an Internet Protocol Security (IPSec) tunnel between a Foreign Agent (FA) and a Home Agent (HA) or between a Packet Data Service Node (PDSN) and the HA, an Authentication Authorization Accounting (AAA) server sending the negotiation IPSec parameter or the profileID corresponding to the negotiation IPSec parameter to said FA or said PDSN. The present invention further provides a system for mobile IP access.

## Description

### Technical Field

The present invention relates to the field of communication, and more especially, to a method and a system for mobile Internet Protocol (IP) service access in a CDMA2000 system.

### Background of the Related Art

Compared with the simple IP service, Mobile IP service provides a wider range of uninterrupted services for users, and is widely used in the CDMA2000, World Interoperability for Microwave Access (Wimax) and the next generation evolution network.

The main network elements of the mobile IP service at the core network side include a Foreign Agent (FA), a Home Agent (HA) and an Authentication Authorization Accounting (AAA) server. Mobile IP accesses the network via FA and HA, and interacts the signaling and data service with the network through FA and HA, and a guarantee of security of the mobile IP service is implemented by a guarantee of the security of the signaling and data service between the FA and HA.

In the 3rd Generation Partnership Project 2 (3GPP2) protocol, the security of the signaling and data service between the FA and HA usually adopts two methods to be guaranteed as follows.

The first method is to adopt an authentication extension between the FA and HA, that is, to configure a HA list and related parameters in the FA and configure a FA list and related parameters in the HA. The disadvantage of this method is that the lists and related parameters needs to be configured manually, and for a complicated networking environment, the operation and maintenance works are not convenient enough. Especially in the international roaming scenario of the mobile IP service, all the configuration of interworking HAs in worldwide should be known at each time when configuring the FA and the configuration of the newly added FAs should be added in the global HAs, which has poor practical operability.

The second method is to adopt an Internet Protocol Security (IPSec) tunnel, that is, the AAA server sends a pre-shared key needed in the IPSec and Internet Key Exchange (IPSec IKE) negotiation.

In certain CDMA2000 systems, a Packet Data Service Node (PDSN) has the same function as the FA when being accessed by mobile IP users, and thus, the FA can be replaced by the PDSN in the second method.

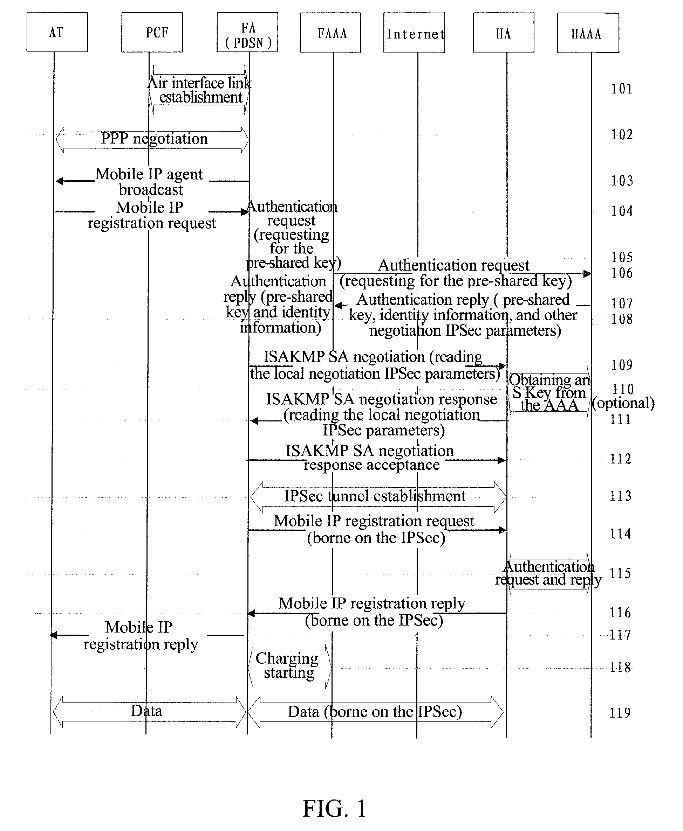

Compared with the first method, the security of adopting an IPSec tunnel in the second method is higher, and the existing method for mobile IP access by adopting an IPSec tunnel comprises the following steps, as shown in FIG.1.

Step 101, the Packet Control Function (PCF) sets up an air interface link with the FA or PDSN.

Step 102, the access terminal negotiates the PPP with the FA or PDSN, and the FA or PDSN sends agent broadcast to the access terminal.

Step 103, the access terminal obtains mobile IP related information by the agent broadcast.

Step 104; the access terminal initiates mobile IP registration to the FA or PDSN.

Steps 105 to 108, the FA or PDSN interacts with the AAA server to obtain authentication information including a pre-shared key and a KeyID, and at the meantime, sends the HA address to the FA or PDSN.

Step 109, the FA or PDSN reads the other negotiation IPSec parameters configured locally, and performs ISAKMP SA negotiation including the proposed the ISAKMP SA information, key materials and KeyID with the HA according to the authentication information sent by FA.

Step 110, the HA recovers the FA address according to the KeyID, and obtains an S Key for generating the pre-shared key of IPSec from the AAA server and saves the S Key in local.

Steps 111∼112, the HA reads other negotiation IPSec parameters pre-configured locally, and negotiates with the FA or PDSA to establish ISAKMP SA.

Step 113, the PDSN/FA and HA negotiate to establish the IPSec SA.

Steps 114∼117, when the MIP registration is finished, the signaling between the PDSN/FA and HA is borne on the IPSec tunnel.

Step 118, the FA informs the AAA server of charging starting.

Step 119, the mobile IP access is finished, and the access terminal starts a data service, in which the data between the FA and HA is borne on the IPSec tunnel.

The existing method for the mobile IP service access by adopting an IPSec tunnel has the following problems:
problem 1 is that the IPSec security association at both ends of the IKE negotiation still needs to configure a plurality negotiation parameters besides the pre-shared key, such as the transmission mode of the IPSec between FA and HA, the address at the both ends of the tunnel in the tunnel mode, security type and specific encryption authentication algorithm and so on, and these parameters still need to be manually configured in the FA and HA, and the operability is poor;
problem 2 is that the 3GPP2 protocol makes a plurality of constraints on the IKE negotiation, such as the major version and minor version, and the selector, etc. of the Internet Security Association and Key Management Protocol (ISAKMP), which unifies the standard but has the bad expansibility. For example, the mainstream IKE at present already has versions of V1.0 and V2.0, but the 3GPP2 still stays at version 0, and thus different systems and versions have problems in the practical docking.

### Summary of the Invention

The present invention provides a method and a system for mobile IP service access, which can improve the usability of the system and satisfy the requirements for diversified security policies of the operators at the same time.

In order to solve the above problem, the present invention provides a method for accessing a mobile IP service, which comprises: in a process of negotiating and establishing an Internet Protocol Security (IPSec) tunnel between a Foreign Agent (FA) and a Home Agent (HA) or between a Packet Data Service Node (PDSN) and a Home Agent (HA), an Authentication Authorization Accounting (AAA) server sending a negotiation IPSec parameter or a profile identity (profileID) corresponding to the negotiation IPSec parameter to said FA or said PDSN.

The above method further comprises: in the process of negotiating and establishing the IPSec tunnel between the FA and the HA or between the PDSN and the HA, said AAA server sending the negotiation IPSec parameter or the profileID corresponding to the negotiation IPSec parameter to said HA.

The process of negotiating and establishing said IPSec tunnel between said FA and said HA or between said PDSN and said HA comprises:
A1, said FA or PDSN sending an authentication request to said AAA server;
A2, said AAA server sending an authentication reply including said negotiation IPSec parameter or the profileID corresponding to said negotiation IPSec parameter to said FA or PDSN;
A3, said FA or PDSN sending a negotiation request to said HA according to the authentication reply sent by said AAA server;
A4, said HA receiving said negotiation request, and obtaining said negotiation IPSec parameter or the profileID corresponding to the negotiation IPSec parameter from the local HA or said AAA server, and said FA or said PDSN negotiating with said HA to establish an IPSec tunnel.

Said authentication response further includes a pre-shared key and identity information;
said negotiation request is a negotiation request for establishing an ISAKMP SA initiated by said FA or PDSN according to said negotiation IPSec parameter, and the negotiation request for establishing said ISAKMP SA includes information of the ISAKMP SA which is proposed to establish, a key material and identity information;
in the step A4, said HA obtains said negotiation IPSec parameter from the local HA or said AAA server after receiving the negotiation request, and the step of said FA or said PDSN negotiating with said HA to establish the IPSec tunnel comprises:
said HA recovering an address of said FA or PDSN according to said identity information in the negotiation request for establishing said ISAKMP SA after receiving the negotiation request for establishing said ISAKMP SA, and obtaining an S Key and said negotiation IPSec parameter from the local HA, or obtaining the S Key and said negotiation IPSec parameter from said AAA server;
said HA generating a pre-shared key of the IPSec according to said identity information and said S Key; and
said HA interacting with said FA or PDSN, thereby establishing the IPSec tunnel between said FA and said HA or between said PDSN and said HA.

Said authentication reply further comprises a pre-shared key and identity information;
the step A3 further comprises: said FA or PDSN obtaining said negotiation IPSec parameter in the local FA or PDSN according to the profileID corresponding to said negotiation IPSec parameter;
in the step A3, said negotiation request is a negotiation request for establishing an ISAKMP SA initiated by said FA or PDSN according to said negotiation IPSec parameter, and the negotiation request for establishing said ISAKMP SA includes information of the ISAKMP SA which is proposed to establish, a key material and identity information;
in the step A4, said HA obtains said negotiation IPSec parameter from the local HA or said AAA server after receiving the negotiation request, and the step of said FA or said PDSN negotiating with said HA to establish the IPSec tunnel comprises:
said HA recovering an address of said FA or PDSN according to said identity information in the negotiation request for establishing said ISAKMP SA after receiving the negotiation request for establishing said ISAKMP SA, and obtaining an S Key and said profileID corresponding to the negotiation IPSec parameter from the local HA, or obtaining the S Key and said profileID corresponding to the negotiation IPSec parameter from said AAA server;
said HA generating a pre-shared key of the IPSec according to said identity information and said S Key; and
said HA interacting with said FA or PDSN, thereby establishing the IPSec tunnel between said FA and said HA or between said PDSN and said HA.

Said negotiation IPSec parameter or the profileID corresponding to the negotiation IPSec parameter is the negotiation IPSec parameter corresponding to a security level of an access terminal or the profileID corresponding to the negotiation IPSec parameter corresponding to the security level of the access terminal.

Said security level of the access terminal is preset by an operator or by a user.

The present invention further provides an Authentication Authorization Accounting (AAA) server for supporting mobile IP access, which is configured to: send a negotiation IPSec parameter or a profile identity (profileID) corresponding to the negotiation IPSec parameter to a Foreign Agent (FA) or a Packet Data Service Node (PDSN) in a process of negotiating and establishing an IPSec tunnel between the FA and a Home Agent (HA) or between the PDSN and the HA.

The AAA server is further configured to: send the negotiation IPSec parameter or the profile identity (profileID) corresponding to the negotiation IPSec parameter to the HA in the process of negotiating and establishing the IPSec tunnel between said FA and said HA or between said PDSN and said HA.

The AAA server is configured to: send said negotiation IPSec parameter or the profileID corresponding to the negotiation IPSec parameter after selecting the corresponding negotiation IPSec parameter or the profileID corresponding to the negotiation IPSec parameter according to a security level of an access terminal.

The present invention further provides a Foreign Agent (FA) or a Packet Data Service Node (PDSN) for supporting mobile IP access, which is configured to: obtain a negotiation IPSec parameter from an AAA server in a process of negotiating and establishing an IPSec tunnel between said FA and said HA or between said PDSN and said HA; or, obtain a profileID corresponding to the negotiation IPSec parameter from said AAA server, and obtain the negotiation IPSec parameter according to said profileID in the process of negotiating and establishing the IPSec tunnel between said FA and said HA or between said PDSN and said HA.

The present invention further provides a Home Agent (HA) for supporting mobile IP access, which is configured to: obtain a negotiation IPSec parameter or a profileID corresponding to the negotiation IPSec parameter from an Authentication Authorization Accounting (AAA) server in a process of negotiating and establishing an IPSec tunnel between a Foreign Agent (FA) and said HA or between a Packet Data Service Node (PDSN) and said HA.

The present invention further provides a system for mobile IP access comprising: a Foreign Agent (FA) or a Packet Data Service Node (PDSN), and an Authentication Authorization Accounting (AAA) server, wherein,
said AAA server is configured to: send a negotiation IPSec parameter or a profileID corresponding to the negotiation IPSec parameter to said FA or said PDSN in a process of negotiating and establishing an IPSec tunnel between the FA and a Home Agent (HA) or between the PDSN and the HA;
said FA or PDSN is configured to: obtain the negotiation IPSec parameter from said AAA server in the process of negotiating and establishing the IPSec tunnel between said FA and the HA or between said PDSN and the Home Agent (HA); or obtain a profileID corresponding to the negotiation IPSec parameter from said AAA server and obtain the negotiation IPSec parameter according to said profileID in the process of negotiating and establishing the IPSec tunnel between said FA and the HA or between said PDSN and the Home Agent (HA).

Said AAA server is further configured to: send a negotiation IPSec parameter or the profileID corresponding to the negotiation IPSec parameter to said HA in the process of negotiating and establishing the IPSec tunnel between said FA and said HA or between said PDSN and said HA;
said HA is configured to: obtain the negotiation IPSec parameter or the profileID corresponding to the negotiation IPSec parameter from said AAA server in the process of negotiating and establishing the IPSec tunnel between said FA and said HA or between said PDSN and said HA.

Said AAA server is configured to: send said negotiation IPSec parameter or the profileID corresponding to the negotiation IPSec parameter after selecting the corresponding negotiation IPSec parameter or the profileID corresponding to the negotiation IPSec parameter according to a security level of an access terminal.

Compared with the related art, the beneficial effects of the present invention are in that:
the present invention selects and sends the negotiation IPSec parameter or the profileID corresponding to the negotiation IPSec parameter to the FA and HA, or to the PDSN and HA, which avoids manually configuring the negotiation IPSec parameter in the above network elements, simplifies the system configuration and improves the usability of the system. Meanwhile, as the negotiation parameters on the FA and HA or on the PDSN and HA are unified to be sent, the protocol versions are the same, which avoids the docking difficulty caused by the different versions. Moreover, the security level of the access terminal can be preset by the operators in the present invention, and the access terminals with different security levels correspond to different authentication replies which correspond to security policies with different levels, thereby satisfying the requirements for diversified security policies of the operators.

### Brief Description of Drawings

FIG. 1 illustrates an existing procedure for mobile IP access in the CDMA2000 system;
FIG. 2 illustrates a procedure for mobile IP access in the CDMA2000 system according to the present invention;
FIG. 3 illustrates an example of the diversified security polices of the method for mobile IP access in a CDMA2000 system according to the present invention;
FIG. 4 illustrates a structural diagram of the system according to the present invention.

Preferred Embodiments of the Present Invention

Below the present invention will be further described in detail with reference to drawings and specific embodiments.

### Example 1

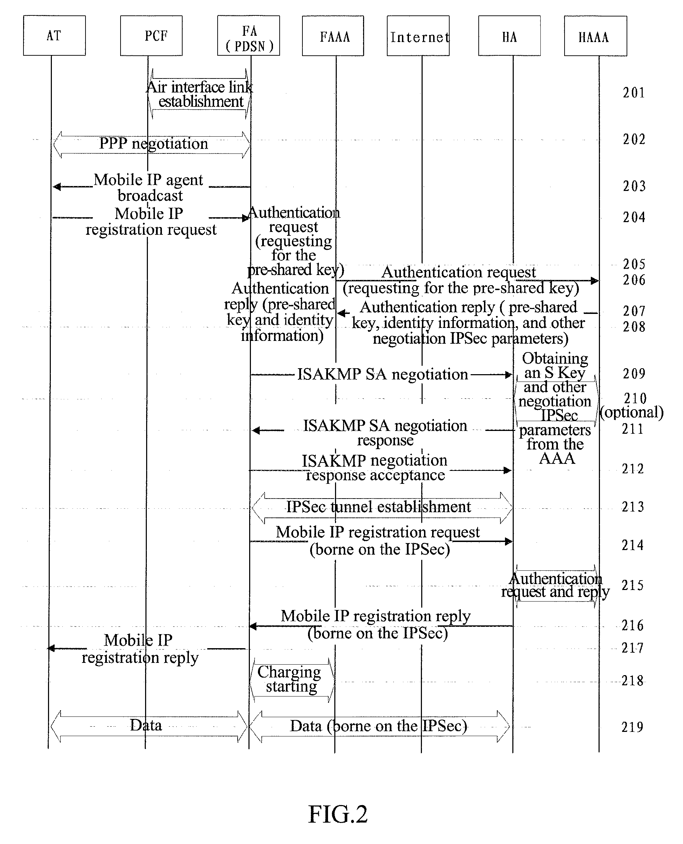

As shown in FIG.2, the method for mobile IP access in the CDMA2000 system of the system for mobile IP access based on the CDMA2000 system of this example comprise the following processing steps.

Step 201, a Packet Control Function (PCF) subsystem establishes an air interface link with a FA.

Step 202, the access terminal negotiates a Point to Point Protocol (PPP) with the FA, and the FA sends an agent broadcast to the access terminal.

Step 203, the access terminal obtains mobile IP related information based on the agent broadcast.

Step 204, the access terminal initiates mobile IP registration to the FA.

Step 205, the FA sends an authentication request to the FAAA server and requests for a pre-shared key from the FAAA server at the same time.

The AAA server includes a Home Authentication Authorization Accounting (HAAA) server and a Foreign Authentication Authorization Accounting (FAAA) server, wherein the HAAA server is used to select and send the negotiation IPSec parameter; and the FAAA server is used to forward the authentication request and authentication reply between the FA and HAAA server.

Step 206, the FAAA server forwards the authentication request to the HAAA server.

Step 207, the HAAA server selects and sends different authentication replies including includes the negotiation IPSec parameter, pre-shared key and identity information and so on to the FAAA server according to the security level of the access terminal;
the security level of the access terminal is preset by the users or operators, and the access terminals with different security levels can correspond to different authentication replies which correspond to security policies with different levels.

The negotiation IPSec parameters include an IKE version number, an IKE negotiation identity type, an IKE negotiation exchange type, an IPSec mode, an encryption algorithm, an authentication algorithm, addresses of both ends of the IPSec tunnel, a selector, an ISAKMP SA lifetime, a DH exchange group, a key length and parameters subsequently introduced for IPSec protocol development.

Step 208, the FAAA server forwards the authentication reply to the FA;
the AAA server sends the negotiation IPSec parameters, etc. to the FA, which avoids manually configuring various parameters on the FA, simplifies the system configuration, and improves the usability of the system.

Step 209, the FA sends an negotiation request for establishing the ISAKMP SA to the HA according to the negotiation IPSec parameter sent by the AAA server, and the negotiation request for establishing the ISAKMP SA includes the information of the ISAKMP SA that is proposed to establish, key materials and identity information.

Step 210, the HA recovers the address of the FA according to the identity information in the negation request after receiving the negotiation request for establishing the ISAKMP SA and sends an acquisition request of the S Key and the negotiation IPSec parameter to the AAA server, and the AAA server sends the S Key and negotiation IPSec parameter to the HA, and the HA generates a pre-shared key of IPSec according to the identity information and S Key and stores the information in the local; if the local has stored the S Key and the negotiation IPSec parameter, the information stored in the local is read directly and the step 210 is skipped.

The pre-shared keys on the HA and FA are used for encrypting the data and signaling which are transmitted in the IPSec tunnel.

The AAA server sends the negotiation IPSec parameters, etc. to the HA, which avoids manually configuring various parameters on the HA, simplifies the system configuration, and improves the usability of the system. The negotiation IPSec parameters are unified to be configured in the AAA server and then are sent to the FA and HA, which can ensure the version of sent negotiation IPSec parameters is identical with the that of the HA and FA and complies with the capacities supported by the HA and FA, thereby improving the system extensibility.

Step 211, the HA sends an ISAKMP SA negotiation request response to the FA.

Step 212, the FA sends the response that is received to the HA after receiving the ISAKMP SA negotiation request response, and thus the ISAKMP SA is established.

Step 213, the FA establishes an IPSec SA with the HA after establishing the ISAKMP SA; and then the FA establishes an IPSec tunnel with the HA after establishing the IPSec SA.

Steps 214∼217, the access terminal completes the mobile IP registration, wherein the signaling between the FA and HA is borne on the IPSec tunnel.

Step 218, the FA informs the AAA server of charging starting.

Step 219, the mobile IP access is finished, and the access terminal starts a data service, wherein data between the FA and HA are borne on the IPSec tunnel.

The related art has the problem that the security policy is single, which can not satisfy the requirements of customizing the security policy of the operators. Operators may propose a plurality of customizing requirements when constructing the mobile IP network, such as distinguishing the accounts to implement IPSec between the FA and HA, and distinguishing the internal networks of the operators and the networks of other operators to implement different IPSec policies, and so on, however, the currently architecture can not satisfy the requirements of the operators.

In the present invention, the security level of the access terminal is preset by the operators, and the access terminals with different security levels correspond to different authentication responses which correspond to security policies with different levels, thereby satisfying the requirements for diversified security policies of the operators.

The present example selects and sends the negotiation IPSec parameter to the FA and HA, which avoids manually configuring the negotiation IPSec parameter in the above network elements, simplifies the system configuration, and improves the usability of the system. Meanwhile, as the negotiation parameters on the FA and HA are unified to be sent, the protocol versions are the same, which avoids the docking difficulty caused by the different versions. On the other hand, different negotiation IPSec parameters are provided for different security levels, i.e., different security policies are provided, which can satisfy the requirements for diversified security policies of the operators.

### Example 2

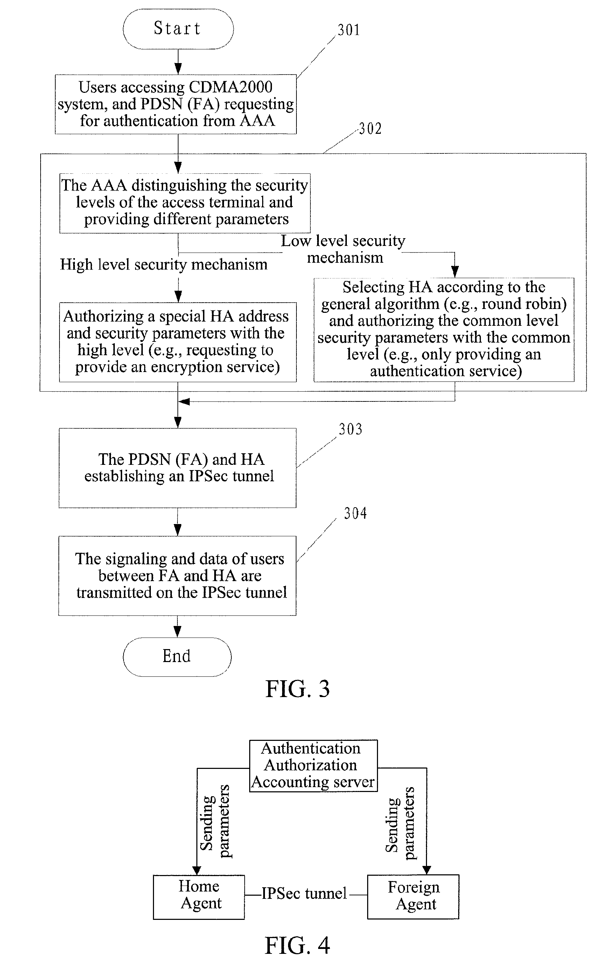

As shown in FIG.3, in the method for mobile IP access in the CDMA2000 system according to example two of the present invention, the implementation of diversified security policies comprises the following steps.

Step 301, the access terminal accesses the CDMA2000 system, and the PCF establishes an air interface link with said FA; the access terminal negotiates a PPP with the FA, and the FA sends an agent broadcast to the access terminal; the access terminal obtains mobile IP related information through the agent broadcast; the access terminal initiates mobile IP registration; the FA sends an authentication request to the AAA server and requests a pre-shared key at the same time.

Step 302, the AAA server provides different negotiation IPSec parameters, that is, provides security policies with different levels according to the security level of the access terminal to send to the FA;
the security policies are reflected in different negotiation IPSec parameters, for example, the negotiation IPSec parameters include the addresses of both ends of the IPSec tunnel, and the high level security policy provides a special HA address and other negotiation IPSec parameters with a confidential level, and the low level security policy selects the HA address according to the general algorithms, e.g., the round robin algorithm, and only provides other negotiation IPSec parameters of the authentication service.

Step 303, the FA and HA IPSec establishes the IPSec tunnels with different security levels according to different negotiation IPSec parameters.

Step 304, the signaling and data of the access terminal are transmitted on the IPSec tunnel between the FA and HA.

The access terminals with high security level and low security level transmit the signaling and data on the IPSec tunnels with different security levels, thereby achieve guarantees with different security levels.

### Example 3

In this example, in order to reduce the interactive information between the FA/PDSN and AAA server and between the HA and PDSN, the AAA server only sends a profile identity (profileID) corresponding to the negotiation IPSec parameter, and the FA/PDSN and HA obtain a negotiation IPSec parameter according to the profileID corresponding to the negotiation IPSec parameter and locally store the corresponding relationship between the profileID and the negotiation IPSec parameter in the FA/PDSN and HA, and the difference of this example with the example 1 is in that there is another method for implementing the steps 207∼ 210.

Step 207a, the HAAA server selects and sends an authentication reply including the profileID corresponding to the negotiation IPSec parameter, a pre-shared key and identity information and so on to the FAAA server according to the security level of the access terminal.

Step 208a, the FAAA server forwards the authentication reply to the FA.

Step 209a, the FA obtains a negotiation IPSec parameter in the local according to the profileID corresponding to the negotiation IPSec parameter, the FA sends a negotiation request for establishing the ISAKMP SA to said HA according to the information of the negotiation IPSec parameter, and the negotiation request for establishing the ISAKMP SA includes the information of the ISAKMP SA that is proposed to establish, a key material and identity information.

Step 210a, the HA recovers the address of the FA according to the identity information in the negotiation request after receiving the negotiation request for establishing the ISAKMP SA, and sends an acquisition request of the S Key and the profileID corresponding to the negotiation IPSec to the AAA server; the AAA server sends the S Key and the profileID corresponding to the negotiation IPSec parameter to the HA; the HA generates a pre-shared key according to the identity information and S Key and stores the information (including the S Key and negotiation IPSec parameter) in the local; when performing subsequent access, the information which has been stored can be used.

If the local has stored the S Key and profileID corresponding to the negotiation IPSec parameter, the information stored in the local is read directly and the step 210a is skipped.

The AAA server sends the profileIDs to the FA and HA, and the FA and HA obtain negotiation IPSec parameter according to the profileID in the local, which avoids manually configuring parameters in the FA and HA and saves the communication traffic between the HA and FA at the same time.

### Example 4

As shown in FIG.4, a system for mobile IP access in the CDMA2000 system according to an example of the present invention comprises a home agent, a foreign agent and an authentication authorization accounting (AAA) server, which are configured to negotiate and establish an IPSec tunnel for bearing the signaling and data. In the process of negotiating and establishing an IPSec tunnel between the home agent and foreign agent, the AAA server selects and sends the negotiation IPSec parameter or the profileID corresponding to the negotiation IPSec parameter to the foreign agent and home agent.

The present invention provides an AAA server for supporting mobile IP access, the AAA server is configured to: send a negotiation IPSec parameter or a profileID corresponding to the negotiation IPSec parameter to a FA or a PDSN in the process of negotiating and establishing an IPSec tunnel between the FA and a HA or between the PDSN and the HA.

The AAA server is further configured to: send said negotiation IPSec parameter or said profileID corresponding to the negotiation IPSec parameter to the HA in the process of negotiating and establishing an IPSec tunnel between the FA and the HA or between the PDSN and the HA.

The AAA server is configured to: send said negotiation IPSec parameter or said profileID corresponding to the negotiation IPSec parameter after selecting a corresponding negotiation IPSec parameter or the profileID corresponding to the negotiation IPSec parameter according to the security level of the access terminal.

The present invention further provides a FA or a PDSN for supporting mobile IP access, wherein:
the FA or PDSN is configured to: obtain a negotiation IPSec parameter from said AAA server in the process of negotiating and establishing an IPSec tunnel between the FA and a HA or between the PDSN and the HA; or obtain a profileID corresponding to the negotiation IPSec parameter from said AAA server, and obtain the negotiation IPSec parameter according to the profileID.

The present invention further provides a HA for supporting mobile IP access, wherein:
the HA is configured to: obtain a negotiation IPSec parameter or a profileID corresponding to the negotiation IPSec parameter from an AAA server in the process of negotiating and establishing an IPSec tunnel between a FA and the HA or between a PDSN and the HA.

The present invention further provides a system for mobile IP access, which comprises a FA or a PDSN, and an AAA server and a HA mentioned above.

The present invention is not limited to the CDMA2000 system.

The above description is a further description of the present invention described in detail with reference to specific preferred embodiments, and is only examples for facilitate understanding rather than considering that the specific implementation of the present invention is limited to the description. In a premise of not departing from the concept of the present invention, various possible equivalent transformations or substitutions can be made by those having ordinary skill in the art, these transformations or substitutions shall all fall into the protection scope of the present invention. For example, in certain CDMA2000 systems, a PDSN has the same function as the FA when being accessed by a mobile IP user, and therefore the FA can be replaced by the PDSN in each example mentioned above.

### Industrial Applicability

The present invention selects and sends the negotiation IPSec parameter or the profileID corresponding to the negotiation IPSec parameter to the FA and HA or to the PDSN and HA, which avoids manually configuring the negotiation IPSec parameter in the above network elements, simplifies the system configuration, and improves the usability of the system. Meanwhile, the negotiation parameters on the FA and HA or on the PDSN and HA are unified to be sent, the protocol versions are the same, which avoids the docking difficulty caused by the different versions.

## Claims

1. A method for mobile IP service access comprising:
in a process of negotiating and establishing an Internet Protocol Security (IPSec) tunnel between a Foreign Agent (FA) and a Home Agent (HA) or between a Packet Data Service Node (PDSN) and a Home Agent (HA), an Authentication Authorization Accounting (AAA) server sending a negotiation IPSec parameter or a profile identity (profileID) corresponding to the negotiation IPSec parameter to said FA or said PDSN.

2. The method according to claim 1 further comprises:
in the process of negotiating and establishing the IPSec tunnel between the FA and the HA or between the PDSN and the HA, said AAA server sending the negotiation IPSec parameter or the profileID corresponding to the negotiation IPSec parameter to said HA.

3. The method according to claim 1, wherein the process of negotiating and establishing said IPSec tunnel between said FA and said HA or between said PDSN and said HA comprises:
A1, said FA or PDSN sending an authentication request to said AAA server;
A2, said AAA server sending an authentication reply including said negotiation IPSec parameter or the profileID corresponding to said negotiation IPSec parameter to said FA or PDSN;
A3, said FA or PDSN sending a negotiation request to said HA according to the authentication reply sent by said AAA server;
A4, said HA receiving said negotiation request, and obtaining said negotiation IPSec parameter or the profileID corresponding to the negotiation IPSec parameter from the local HA or said AAA server, and said FA or said PDSN negotiating with said HA to establish an IPSec tunnel.

4. The method according to claim 3, wherein
said authentication response further includes a pre-shared key and identity information;
said negotiation request is a negotiation request for establishing an ISAKMP SA initiated by said FA or PDSN according to said negotiation IPSec parameter, and the negotiation request for establishing said ISAKMP SA includes information of the ISAKMP SA which is proposed to establish, a key material and identity information;
in the step A4, said HA obtains said negotiation IPSec parameter from the local HA or said AAA server after receiving the negotiation request, and the step of said FA or said PDSN negotiating with said HA to establish the IPSec tunnel comprises:
said HA recovering an address of said FA or PDSN according to said identity information in the negotiation request for establishing said ISAKMP SA after receiving the negotiation request for establishing said ISAKMP SA, and obtaining an S Key and said negotiation IPSec parameter from the local HA, or obtaining the S Key and said negotiation IPSec parameter from said AAA server;
said HA generating a pre-shared key of the IPSec according to said identity information and said S Key; and
said HA interacting with said FA or PDSN, thereby establishing the IPSec tunnel between said FA and said HA or between said PDSN and said HA.

5. The method according to claim 3, wherein
said authentication reply further comprises a pre-shared key and identity information;
the step A3 further comprises: said FA or PDSN obtaining said negotiation IPSec parameter in the local FA or PDSN according to the profileID corresponding to said negotiation IPSec parameter;
in the step A3, said negotiation request is a negotiation request for establishing an ISAKMP SA initiated by said FA or PDSN according to said negotiation IPSec parameter, and the negotiation request for establishing said ISAKMP SA includes information of the ISAKMP SA which is proposed to establish, a key material and identity information;
in the step A4, said HA obtains said negotiation IPSec parameter from the local HA or said AAA server after receiving the negotiation request, and the step of said FA or said PDSN negotiating with said HA to establish the IPSec tunnel comprises:
said HA recovering an address of said FA or PDSN according to said identity information in the negotiation request for establishing said ISAKMP SA after receiving the negotiation request for establishing said ISAKMP SA, and obtaining an S Key and said profileID corresponding to the negotiation IPSec parameter from the local HA, or obtaining the S Key and said profileID corresponding to the negotiation IPSec parameter from said AAA server;
said HA generating a pre-shared key of the IPSec according to said identity information and said S Key; and
said HA interacting with said FA or PDSN, thereby establishing the IPSec tunnel between said FA and said HA or between said PDSN and said HA.

6. The method according to any one of claims 1 to 5, wherein said negotiation IPSec parameter or the profileID corresponding to the negotiation IPSec parameter is the negotiation IPSec parameter corresponding to a security level of an access terminal or the profileID corresponding to the negotiation IPSec parameter corresponding to the security level of the access terminal.

7. The method according to claim 6, wherein said security level of the access terminal is preset by an operator or by a user.

8. An Authentication Authorization Accounting (AAA) server for supporting mobile IP access, which is configured to: send a negotiation IPSec parameter or a profile identity (profileID) corresponding to the negotiation IPSec parameter to a Foreign Agent (FA) or a Packet Data Service Node (PDSN) in a process of negotiating and establishing an IPSec tunnel between the FA and a Home Agent (HA) or between the PDSN and the HA.

9. The AAA server according to claim 8, wherein the AAA server is further configured to: send the negotiation IPSec parameter or the profile identity (profileID) corresponding to the negotiation IPSec parameter to the HA in the process of negotiating and establishing the IPSec tunnel between said FA and said HA or between said PDSN and said HA.

10. The AAA server according to claim 8 or 9, wherein the AAA server is configured to: send said negotiation IPSec parameter or the profileID corresponding to the negotiation IPSec parameter after selecting the corresponding negotiation IPSec parameter or the profileID corresponding to the negotiation IPSec parameter according to a security level of an access terminal.

11. A Foreign Agent (FA) or a Packet Data Service Node (PDSN) for supporting mobile IP access, which is configured to: obtain a negotiation IPSec parameter from an AAA server in a process of negotiating and establishing an IPSec tunnel between said FA and said HA or between said PDSN and said HA; or, obtain a profileID corresponding to the negotiation IPSec parameter from said AAA server, and obtain the negotiation IPSec parameter according to said profileID in the process of negotiating and establishing the IPSec tunnel between said FA and said HA or between said PDSN and said HA.

12. A Home Agent (HA) for supporting mobile IP access, which is configured to: obtain a negotiation IPSec parameter or a profileID corresponding to the negotiation IPSec parameter from an Authentication Authorization Accounting (AAA) server in a process of negotiating and establishing an IPSec tunnel between a Foreign Agent (FA) and said HA or between a Packet Data Service Node (PDSN) and said HA.

13. A system for mobile IP access comprising: a Foreign Agent (FA) or a Packet Data Service Node (PDSN), and an Authentication Authorization Accounting (AAA) server, wherein,
said AAA server is configured to: send a negotiation IPSec parameter or a profileID corresponding to the negotiation IPSec parameter to said FA or said PDSN in a process of negotiating and establishing an IPSec tunnel between the FA and a Home Agent (HA) or between the PDSN and the HA;
said FA or PDSN is configured to: obtain the negotiation IPSec parameter from said AAA server in the process of negotiating and establishing the IPSec tunnel between said FA and the HA or between said PDSN and the Home Agent (HA); or obtain a profileID corresponding to the negotiation IPSec parameter from said AAA server and obtain the negotiation IPSec parameter according to said profileID in the process of negotiating and establishing the IPSec tunnel between said FA and the HA or between said PDSN and the Home Agent (HA).

14. The system according to claim 13, wherein said system further comprises a Home Agent (HA), wherein
said AAA server is further configured to: send a negotiation IPSec parameter or the profileID corresponding to the negotiation IPSec parameter to said HA in the process of negotiating and establishing the IPSec tunnel between said FA and said HA or between said PDSN and said HA;
said HA is configured to: obtain the negotiation IPSec parameter or the profileID corresponding to the negotiation IPSec parameter from said AAA server in the process of negotiating and establishing the IPSec tunnel between said FA and said HA or between said PDSN and said HA.

15. The system according to claim 13 or 14, wherein
said AAA server is configured to: send said negotiation IPSec parameter or the profileID corresponding to the negotiation IPSec parameter after selecting the corresponding negotiation IPSec parameter or the profileID corresponding to the negotiation IPSec parameter according to a security level of an access terminal.
